# EUROPEAN PATENT APPLICATION

(11) **EP 2 412 987 A2**
(43) Date of publication of application: **01.02.2012**
(21) Application number: 11176009.6
(22) Date of filing: 29.07.2011
(51) Int. Cl.: F16B 2/22, F16B 5/00

(54) **Structural support fastener**

(30) Priority: 30.07.2010 US 846921
(71) Applicant: Wyrd Miniatures, LLC, Woodstock GA 30188 (US); Unger, Dennis Clifford, Qualicum Beach BC V9K 2S3 (CA)
(72) Inventor: Unger, Dennis Clifford, Qualicum Beach Britsh Columbia V9K 2S3 (CA)
(74) Representative: Hancox, Jonathan Christopher

(57) **Abstract**

A self-retaining structural support fastener (10) that grips a portion of rigid tile material (26) and aligns the tile material in a planar direction to form structures. The invention more specifically relates to a plastic, acrylic, rubber or polymeric clip (14) that is formed in U, T, X, I or L shapes and provides for an attachment of one or more clips (14) together to form fasteners (10) of various shapes in various planar directions, the fasteners to be used to fabricate multi-dimensional representative environmental constructs that simulate modular, multilevel structures and man-made and natural environments.

## Description

### FIELD OF THE INVENTION

The present invention relates to a self-retaining structural support fastener or clip that grips and secures a rigid generally planar material aligning and connecting the rigid material in a desired position relative to other rigid materials to build a desired structure or environment. The invention more specifically relates to a plastic, acrylic, rubber or polymeric fastener that is formed in U, T, X, I, L or other angular shapes and also provides for an attachment of one or more fasteners together to form more complex fasteners to fabricate multi-dimensional representative environmental constructs that simulate modular, multilevel structures and man-made and natural environments.

### BACKGROUND OF THE INVENTION

The use of plastic or metal fasteners to secure, hold, align or group tiles of material such as paper, plastic, cardboard or wood is well known. The fasteners may be formed in various shapes having support legs that extend from a hinged common point to a barb or nub that grips around the sheet of material. These fasteners or clips are commonly in sizes that range from 2 mm to 4 mm (0.08" to 0.16") and may provide partial structural support with increased support requiring more fasteners to be used to increase rigidity. The fasteners may be shape in U, T or L shapes to align, hold or secure one or more tiles in a perpendicular or parallel direction.

A drawback with many fasteners is the inability to modify the planar direction of a fastener relative to another fastener. The present invention overcomes this issue by creating fasteners which combine with one or more other fasteners to create angular or multi-directional fasteners capable of supporting one or more tiles or tiles of material in one or more planar directions. A need exists for a structurally superior fastener that provides for simple and complex structural support with a minimal number of fasteners and facilitates combination and connection of the fasteners themselves to allow modification of the relative planar direction between fasteners and arrangement of supported tiles in a plurality of various planar directions.

### SUMMARY OF THE INVENTION

The present invention relates to a structural support fastener formed from plastic, acrylic, rubber or other polymer which is provided with an inherent elastic bias and frictional gripping capability to engage a generally planar tile piece. The fastener has a pair of opposing support legs extending from a hub and one or more gripping teeth formed at the free ends of at least one of the support legs to facilitate engagement with a tile piece. The opposing support legs and teeth define a jaw into which the tile piece is inserted. The opposing support legs, and hence the jaw, is formed or molded in such a way that the support legs squeeze or grip the opposite sides of the tile piece. The teeth at the free ends of the support legs facilitate insertion by guiding the tile into the jaw of the fastener and also help retain the tile piece in the jaw of the fastener.

The tile may be a generally planar, rigid sheet of paper, plastic, cardboard, wood or other material which can be inserted within the jaw of the fastener and suitably frictionally retained and supported therein. The fastener may have several sets of opposing support legs, or jaws arranged in the form of a U, T, I, X, or L-shape that provide for the insertion of one or more adjacent tiles. It is the rigidity of the fastener and the multiple adjacent tiles which facilitates forming for example floors and/or walls of a structure. The tiles may be graphically designed generally planar, although multi-planar tile surfaces are possible as well, and using a plurality of tiles and fasteners, floor layouts, walls, ceilings and/or roofs, may be formed and designed to fabricate multi-dimensional structures and environments. It is also to be appreciated that topographical representational surfaces, for example a structure representing a topographic map or other natural or man-made environmental surface may be fabricated by such fasteners and tiles as well.

The structural support fastener may be of a width of approximately 1.27 cm to 3.81 cm (0.5" to 1.5") and more specifically a width of 1.91 cm (0.75"). The width providing structural support along an edge and parallel to one or more tiles, the tiles being of an approximate width of 1.5 cm to 20.32 cm (0.59" to 8") and more specifically 7.62 cm to 15.24 cm (3" to 6"). This increased width of the fastener over the prior art provides for increased spacing between fasteners of at least 5.08 cm (2") and greater structural support.

Structural support is also provided by the fastener from an increased length of the support leg, the support leg stretching a distance over a tile secured in the jaw of the fastener of approximately from 0.64 cm to 1.91 cm (0.25" to 0.75") and more specifically a distance of 1 cm (0.39"). In other embodiments the fasteners may be of any length and dimension to accommodate much larger or much smaller tile dimensions, the length determined by approximately scaling the length of the fastener and support legs as described above with respect to other tile dimensions.

The fastener may be made of a plastic, rubber or polymeric material such as nylon, polyethylene terephthalate (PET), polytetrafluoroethylene (PTFE) or other materials that have the desired elastic biasing capabilities and still rigid structural properties to allow the supporting legs of the fastener a certain minimal amount of flexure relative to one another to grasp, support and align the tile within the jaw of the fastener. The dimensions and shape of the teeth at the free end of the legs define a prescribed width and entrance profile for the edge of the tile to be inserted and retained by the fastener. The fastener may be of any color or texture such as a clear see through acrylic to allow the fastener to match the color scheme of a graphical design of the tile material or to provide for a portion of the graphical design to be shown through the fastener. It is to also be appreciated that the fasteners and tiles described herein by this invention may include graphical designs, murals as well as unique structures and environments formed to create multi-level one, two or three dimensional artistic structures for modeling or gaming purposes, although other construction and building uses including civil engineering and architectural design and construction are also contemplated.

In an embodiment of the invention the fastener is formed having a first and second support leg, a hub region and one or more teeth on an interior surface of the one or more of the first and second support legs. The hub region of a first fastener, and/or an outer surface of the legs may also be provided with one or more angular or circular slots along the exterior width of the first support leg and/or hub region. A second fastener includes a respective second support leg and/or hub region having one or more angular or circular protrusions that match the angular or circular slots of the first fastener. In this embodiment of the present invention, the attachment points of one or more protrusions of the first fastener may be inserted in and along the length of the attachment points of one or more slidably mating slots of a second fastener to form a T, I, L, X, acute angle or obtuse angled complex fastener using similar or identical fasteners. Further varieties of complex fasteners may be formed by connecting other individual fasteners to one another.

It is an object of the present invention to fabricate multi-dimensional representative environmental constructs that simulate modular, multilevel structures and man-made and natural environments.

It is another object of the present invention to construct three dimensional, modular, multilevel structures and environments of rigid material tiles such as paper, plastic, cardboard, wood or other material using a structural support fastener that secures a material tile in a planar direction to create floors, walls and ceilings of the structure.

It is another object of the present invention to use plastic, acrylic, rubber or polymeric material to form the structural support fastener.

It is another object of the present invention to form the structural support fastener in various shapes such as U, I, T, L, X or other shapes.

It is another object of the present invention to form the structural support fastener as a self retaining mechanism having a barb, nub or teeth on the interior of one or more support legs of the fastener, the teeth sealing against the opposing teeth or support leg of the fastener.

It is another object of the present invention to form cutouts and/or protrusions along the exterior surface of one or more support legs.

It is a still further object of the invention to form T, I, L, X, acute angle or obtuse angle shape fasteners using identical U-shape fasteners.

The present invention is related to a fastener comprising a hub; a plurality of support legs extending from the hub; at least one protrusion along at least one of the plurality of support legs; at least one slot along at least one of the plurality of support legs mateable to the at least one protrusion formed on a second fastener; and wherein the protrusion of one fastener is insertable into the slot of the second fastener to form a more complex releasably connected fastener.

The present invention is further related to a method of constructing a complex fastener comprising the steps of forming a first fastener having a hub defining a plurality of support legs extending from the hub; providing at least one protrusion along at least one of the plurality of support legs; forming at least one slot along at least one of the plurality of support legs mateable to the at least one protrusion provided on a second fastener; and inserting the protrusion of the first fastener into the slot of the second fastener to form a more complex releasably connected fastener.

The present invention is also further related to a representative environmental construct including a plurality of releasably connectable elements which combine to form a desired 3-dimensional composition, the releasably connectable elements of the representative environmental construct comprising a plurality of substantially rigid tiles; a fastener comprising a hub supporting a clip, and the clip being defined by a pair of support legs spaced a predetermined distance apart to frictionally engage at least one of the plurality of substantially rigid tiles; at least a first releasable attachment point located on at least one of the hub and the clip for connecting the fastener to another fastener to form a more complex releasably connected fastener.

These and other features, advantages and improvements according to this invention will be better understood by reference to the following detailed description and accompanying drawings.

### BRIEF DESCRIPTION OF THE DRAWINGS

FIG. 1 is a perspective view of a first embodiment of the present invention showing an L-shaped structural support fastener;
FIG. 2 is a side view of a first embodiment of the present invention of an L-shaped structural support fastener with a first tile of material being inserted in the fastener;
FIG. 3 is a perspective view of a first embodiment of the present invention showing a T-shaped structural support fastener;
FIG. 4 is a perspective view of a first embodiment of the present invention showing an I-shaped structural support fastener;
FIG. 5 is a side planar view of a first embodiment of the present invention of an L-shaped structural support fastener;
FIG. 6 is a side planar view of a first embodiment of the present invention of a T-shaped structural support fastener;
FIG. 6A is a side planar view of a first embodiment of the present invention of the L-shaped fastener of FIG. 5 connected to the T-shaped structural support fastener of FIG. 6;
FIG. 7 is a side planar view of a first embodiment of the present invention of an I-shaped structural support fastener;
FIG. 8 is a side planar view of a first embodiment of the present invention of an X-shaped structural support fastener;
FIG. 9 is a perspective view of a first embodiment of the present invention of an L-shaped structural support fastener with a first and second tile of material inserted in the fastener;
FIG. 10 is a top view of a first embodiment of the present invention of a plurality of L-shaped structural support fasteners with tiles of material inserted in the fasteners;
FIG. 10A is an inset of the L-shaped structural support fastener with a first and second tile of material;
FIG. 11 is a top view of a first embodiment of the present invention of a plurality of T-shaped structural support fasteners with tiles of material inserted in the fasteners;
FIG. 11A is an inset of the T-shaped structural support fastener with a first, second and third tile of material;
FIG. 12 is a top view of a first embodiment of the present invention of a plurality of I-shaped structural support fasteners with tiles of material inserted in the fasteners;
FIG. 12A is an inset of the I-shaped structural support fastener with a first and second tile of material;

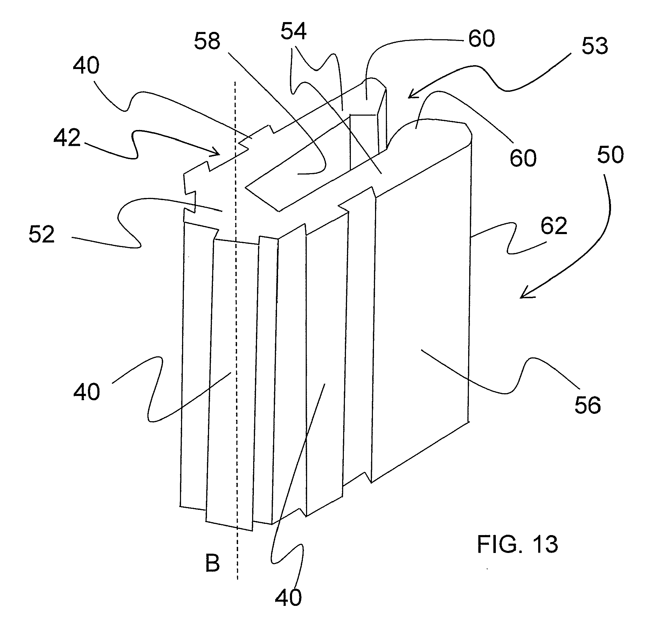

FIG. 13 is a perspective view of a further embodiment of the present invention of a U-shaped structural support fastener;
FIG. 14 is a side view of a further embodiment of the present invention showing the alignment of a plurality of U-shaped structural support fasteners to form an L and angle shaped structural support fastener;
FIG. 15 is a side view of a further embodiment of the present invention showing an angled fastener formed from a plurality of U-shaped structural support fasteners;
FIG. 16 is a side view of a further embodiment of the present invention showing an X-shaped fastener formed from a plurality of U-shaped structural support fasteners;
FIG. 17 is a side view of a further embodiment of the present invention showing a T-shaped fastener formed from a plurality of U-shaped structural support fasteners;
FIG. 18 is a side view of a further embodiment of the present invention showing an L-shaped fastener formed from a plurality of U-shaped structural support fasteners;
FIG. 19 is a side view of a further embodiment of the present invention showing a star shaped fastener formed from a plurality of U-shaped structural support fasteners;
FIG. 20 is a perspective view of a multi-level structure formed from a plurality of material tile and various shaped structural support fasteners.

### DETAILED DESCRIPTION OF THE INVENTION

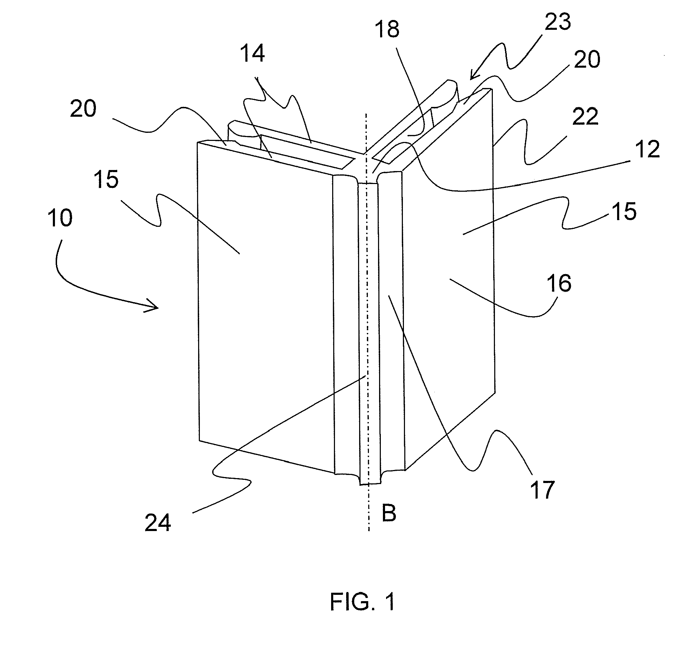

A first embodiment of the present invention is shown in FIG. 1 as an L-shaped fastener 10 which can align respective tiles at approximately a ninety (90) degree angle with respect to one another. It is to be appreciated that the L-shaped fastener is merely one embodiment and other configurations and shapes are certainly possible, other examples of which are shown and discussed below. The L-shaped fastener comprises a hub 12 extending along an axis B and the hub supports two tile clips 14, each clip 14 being defined as a respective pair of support legs 15 that extends out from the hub 12. Each clip 14 being designed to engage and retain generally a single tile (tile not shown here), in this case at a right angle relative to one another.

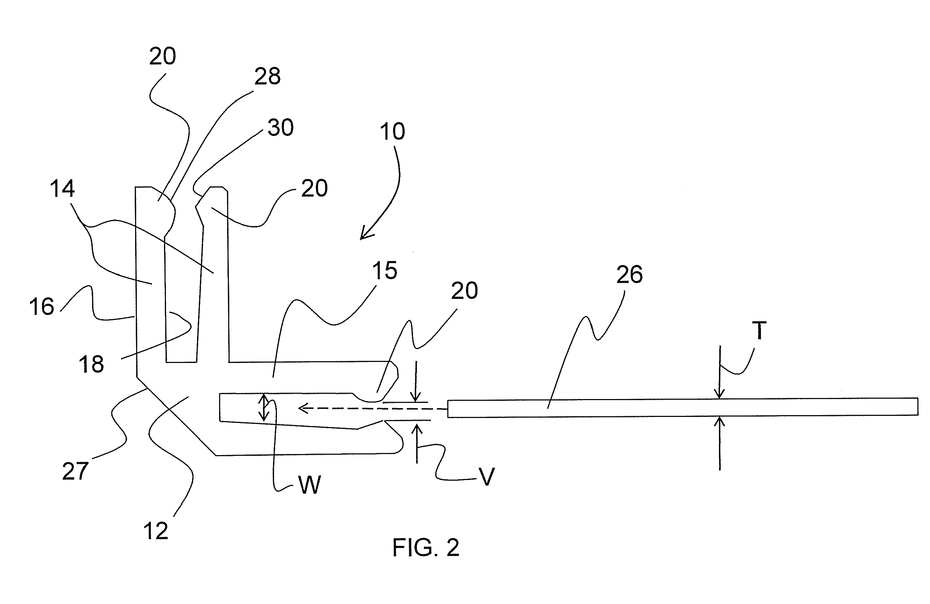

Each support leg 15 of each clip 14 has an outer surface 16 and an inner surface 18 with one or more teeth 20 formed along or near the free edge 22 on the inner surface 18 of the support leg 15. Each clip 14 has a first and second support leg 15 extending from the hub 12 to the free edge 22 and defining a jaw 23 between the first and second support legs into which a tile can be inserted. The support legs 15 extend from an integral connection with the hub 12 in the nature of a living hinge which has an inherent elasticity provided by the relative connection of the relatively thinner support legs 15 to the thicker hub 12. The arrangement of the support legs 15 is a separation which defines the jaw 23 into which the insertion of a tile 26 occurs as shown in FIG. 2. The separation of the support legs 15, or width W of the jaw 23, is adapted to hold and releasably secure one or more tiles in the jaw 23. The jaw 23 has a width W which can be smaller than the thickness T of the tile, the same size, or even larger. In either case the teeth 20 may present a reduced width V smaller than the thickness T of the tile, so that a greater pressure is applied by the support legs 15 to a portion of the tile directly engaged with the teeth 20. In any event the support legs 15 are elastic to the extent that a certain amount of flex permits the jaw 23 to flex open and accept and secure the tile 26 within the jaw 23. The teeth 20 may have a protruding rounded surface 28 that extends the entire length L of the fastener or a portion thereof or be defined by an angled surface 30 to allow easy insertion of a tile 26 without damage to the surface of the tile material.

The hub 12 may have a grip feature 24 as shown in FIG. 1 along the axis B to more easily hold the fastener when inserting a tile of material 26 or may have a flat surface 27 as seen in FIG. 2. The hub 12 may also comprise a recess 17 for receiving a tile from an upper level of a multi-tiered structure, the recess 17 providing alignment and stability to the construction of one three-dimensional level on top of another. A tile from the upper level rests within the recess 17 and aligns the upper level in place over a lower level. The hub 12 may also be flat, rounded or other shapes which facilitate the connection of additional fasteners as well as handling of the individual fasteners themselves. In further embodiments as described below a slot or protrusion may be formed within the hub 12 or leg 15 to allow one or more other fasteners having corresponding slots/protrusions to be attached to a first fastener to form the more complex fastener in various shapes and angles. The fastener may also be in a variety of colors or translucent to provide for viewing of a graphical design on a tile of material 26 through the structural support fastener.

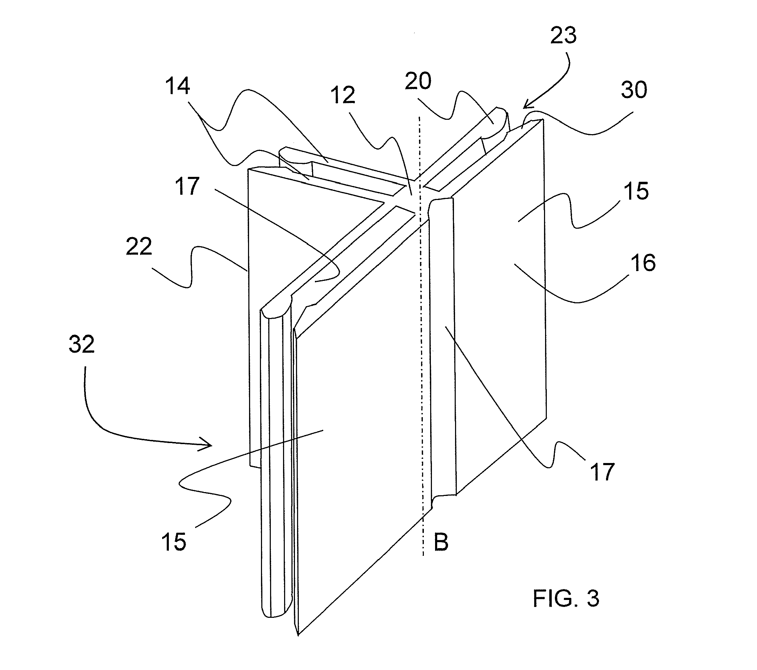

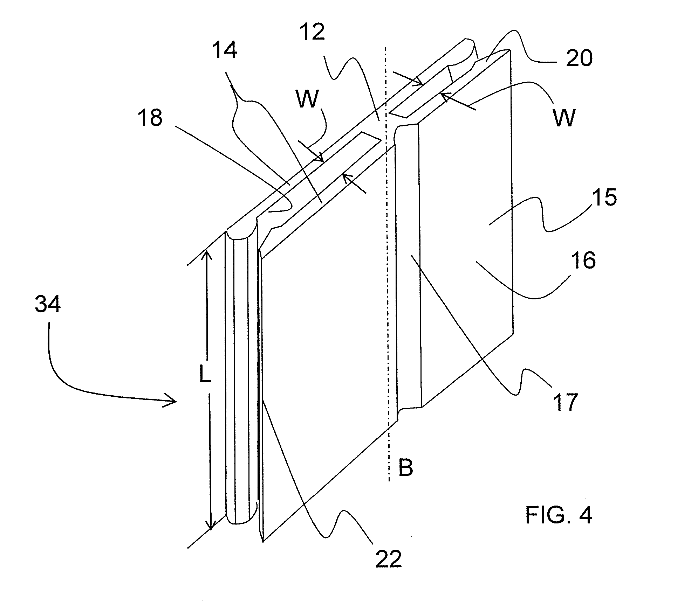

The fastener may be formed in various shapes such as a T-shaped 32 as shown in FIG. 3 or in an I-shaped 34 as shown in FIG. 4. The support legs 15 of the T, I or L-shaped fastener may be of comparable widths W or the width W between some legs 15 may be greater in comparison to another clip 14 having a smaller width W' to provide additional rigidity for more complex structures or for thicker, heavier or thinner and less rigid material tiles 26. The teeth 20 may be formed along the entire length L of the support leg 15 providing increased surface area between the fastener and the tile 26 to more securely hold the tile within the fastener. Additional teeth may be provided along the inner surface of each leg 15 besides that shown in the figures.

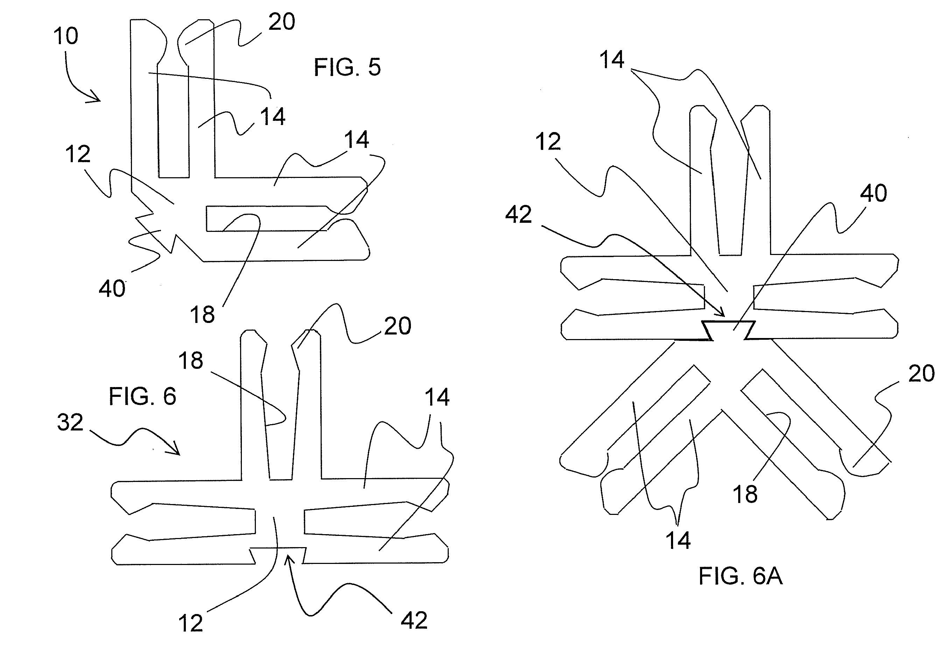

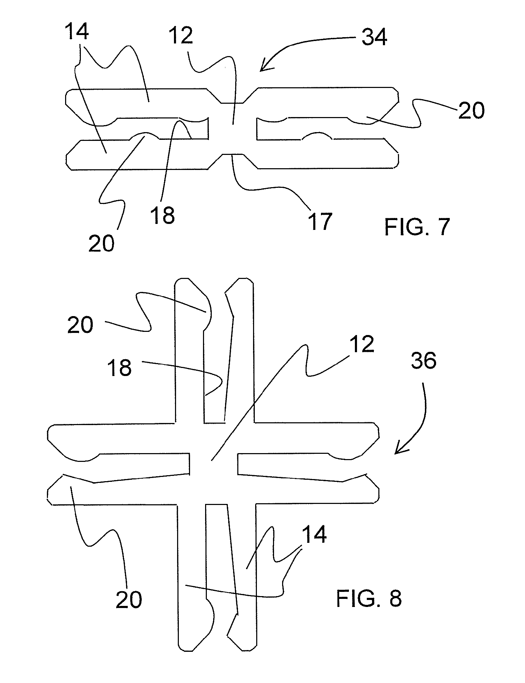

A profile view of the L, T, X and I shaped fasteners is shown in FIGS. 5 - 8 having the respective clips 14 at right angles to one another. It is to be appreciated that the clips can extend from the hub 12 relative to one another at other angles besides right angles as well. The teeth 20 may be formed on each of the support legs 15 as shown in FIG. 5 or a plurality of teeth may be formed separated or adjacent one another on the inner surface of the support legs 15 as shown in FIG. 7. Alternatively, teeth 20 may be formed on each of the support legs 15 with different embodiments producing varying degrees of frictional engagement between the tile 26 and the fastener. The tile material 26 may also be dimpled or ridged to secure the material within the fastener.

As best seen in FIGS. 5 and 6 a slot 42 may be formed in the hub 12 to receive a respectively mating protrusion 40 of another hub 12. As seen in FIG. 6A, the combination of the fasteners of FIGS. 5 and 6 produces a more complex fastener having the clips 14 of the L-shaped fastener 10 extending at a 45 degree angle relative to the adjacent clips 14 of the T-shaped fastener 32.

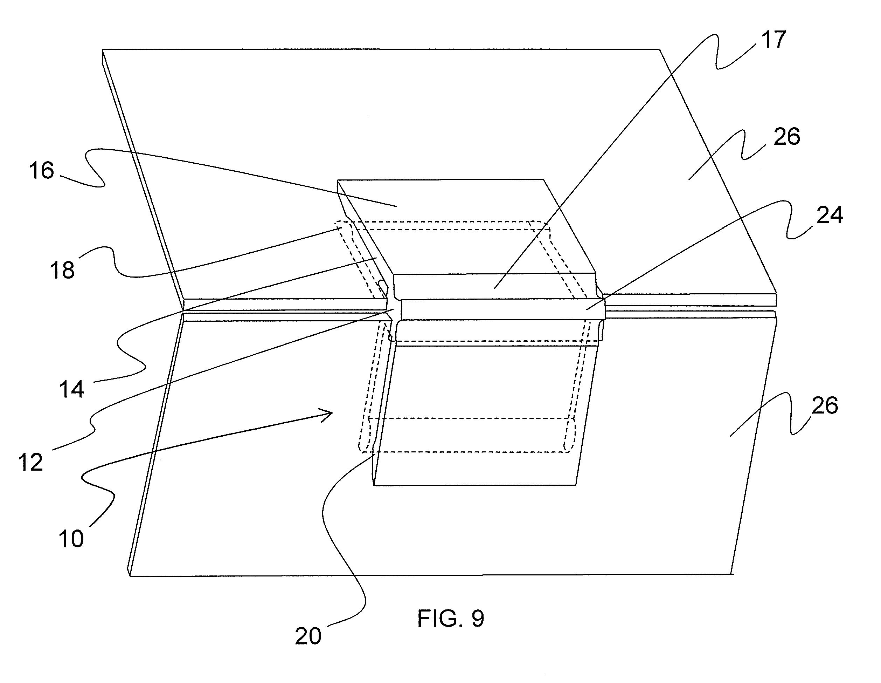

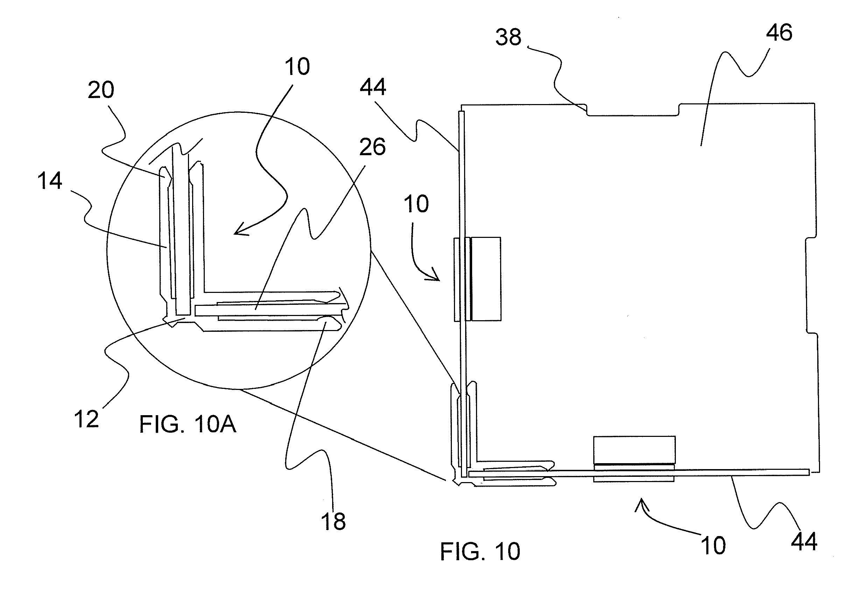

By inserting more than one tile 26 in the L-shaped fastener 10 as shown in FIG. 9, a two sided structure may be formed. The tiles 26 are rigidly held, and by forming an indented cutout 38 having a depth about half the thickness of the hub 12 at the edge of the tile 26 as shown in FIGS. 10 - 12, the edges of each of the tiles of material 26 may directly abut, or touch with a minimal gap or one tile may overlap the other. The L-shaped fastener 10 aligns the tiles perpendicularly and with other fasteners the tiles 26 define floors 46, walls 44, ceilings, roofs and other structural elements. As shown in FIG. 10, three tiles 26 and three fasteners 10 are used to construct two walls 44 and a floor 46. The inset FIG. 10A shows the tile 26 pinched between the teeth 20 of the fastener 10 securing the tile 26 in place. The walls 44 are formed by aligning two tiles 26 within a first fastener 10 and then attaching an L-shaped fastener 10 to the same side of each of the two tiles 26. As seen in FIG. 10A the tiles forming the walls 44 are shown overlapping a portion of the hub 12 due to the cutouts 38 in the tiles 26 to abut and form a substantially closely toleranced corner section of the structure. A third tile 26 is inserted into each fastener 10 on each of the tiles 26 to form a floor 46, or ceiling 48 if the structure is inverted.

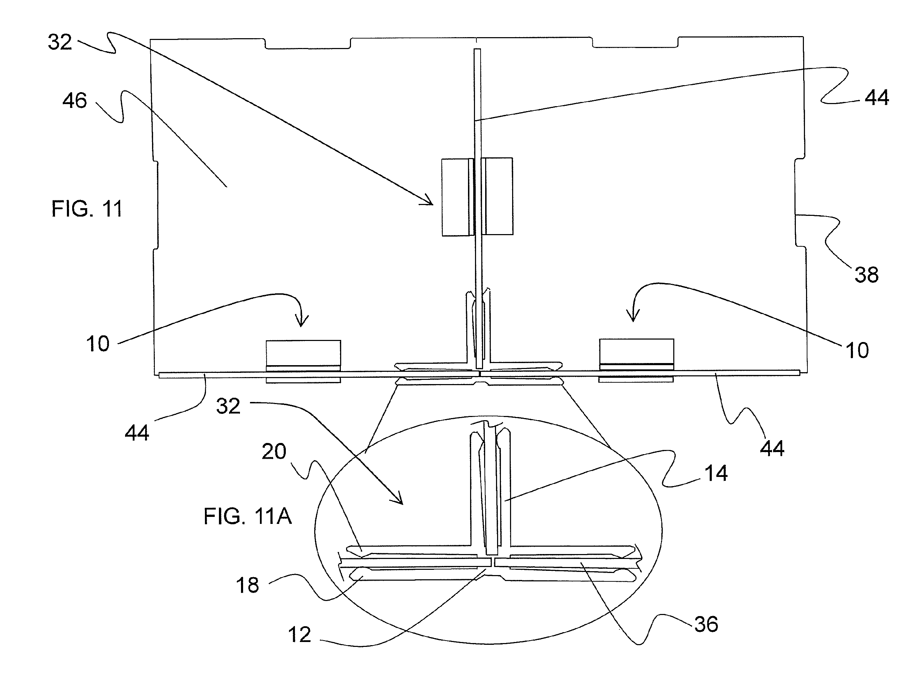

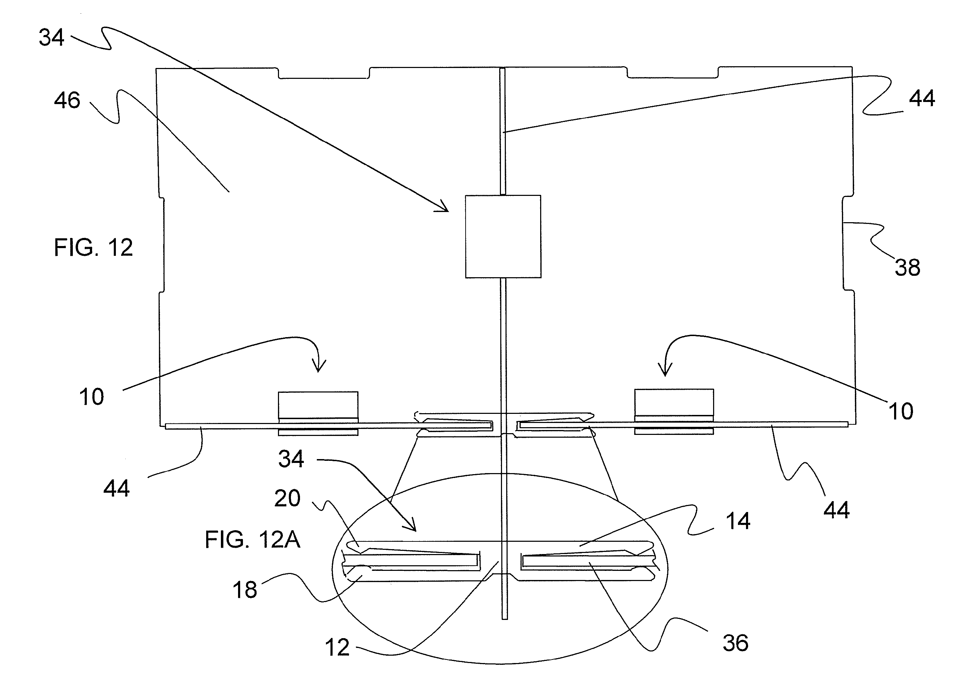

A structure having two separate interiors may be formed by using a T-shaped fastener 32 in place of the first and second L-shaped fasteners as shown in FIGS. 11-11A. The T-shaped fastener 32 allows three walls 44 to be constructed, with one wall 44 dividing the floor region 46. The interior wall 44 can be used to structurally support a second level of similar construction above the first, with the second structure forming a ceiling 48 to the first structure. Alternatively a wall 44, floor 46 or ceiling 48 may be extended by replacing the T-shaped fasteners 32 with I-shaped fasteners 34 as shown in FIGS. 12-12A. An X or cross shaped fastener 36 may also be used to engage four walls 44 and create multiple rooms.

In a further embodiment, the fastener may be formed as a U-shaped clip 50, the clip having two support legs 54 extended from a hub 52, the hub 52 retaining the clip in a normally closed position. The hub 52 is defined having an axial length along the axis B such that each of the support legs 54 extend radially therefrom to a free end 62. The hub 52 and first and second support legs 54 defining a jaw 53 to form a living hinge having an elasticity permitting at least some separation through the insertion of a tile 26 into the jaw 53. Each support leg 54 has an inner surface 58 with one or more teeth 60 formed along or near the free end 62 of the support leg planar surface 56. The teeth 60 of the U-shaped clip facilitate securing the tile 26 in the jaw 53.

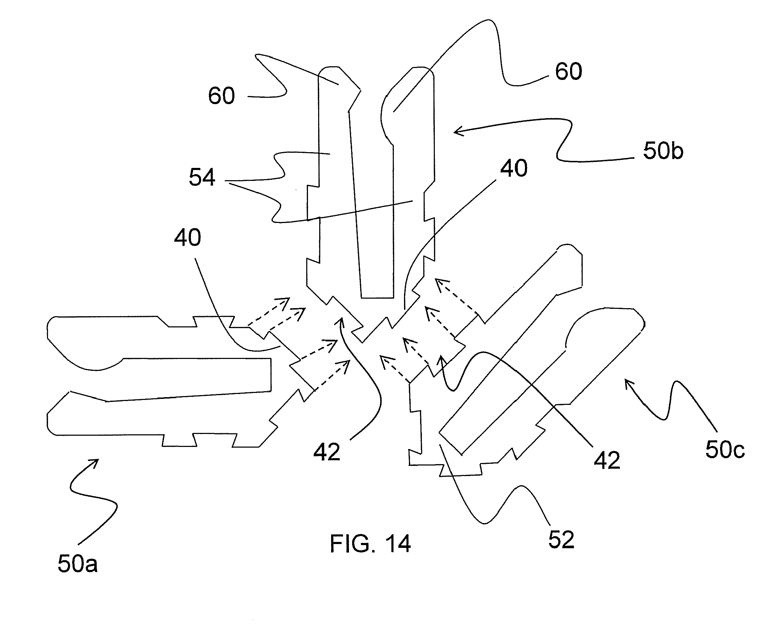

Each of the planar surfaces 56 of the U-shaped clip 50 may have one or more attachment points in the form of protrusions 40 and/or slots 42 formed along the axial length of at least either or both the hub 52 and an outer surface 56 of one or more support legs 54. The protrusions 40 or slots 42 may be formed in various shapes with an angular or round surface, the shape of the protrusions 40 are mateable and releasably connectable to the shape of the slots 42. As shown in FIG. 14, a first clip 50a is aligned with a second clip 50b, the first clip 50a having a protrusion 40 that mates with a slot 42 of the second clip 50b. Once aligned, the protrusion 40 of the first clip 50a may be slid, or snapped, into the slot 42 and secured to the second clip 50b, forming an L-shaped fastener from the two U-shaped clips 50. A protrusion 40 of the second clip 50b may then be aligned with a slot 42 of a third clip 50c and be slid into the slot 42 and secured to the third clip 50c forming a modified T-shaped fastener where at least one clip 50c is aligned at a different angle than 90 degrees relative to an adjacent clip 50b. Tiles 26 may then be inserted into each U-shaped fastener to form intricate structures and environments.

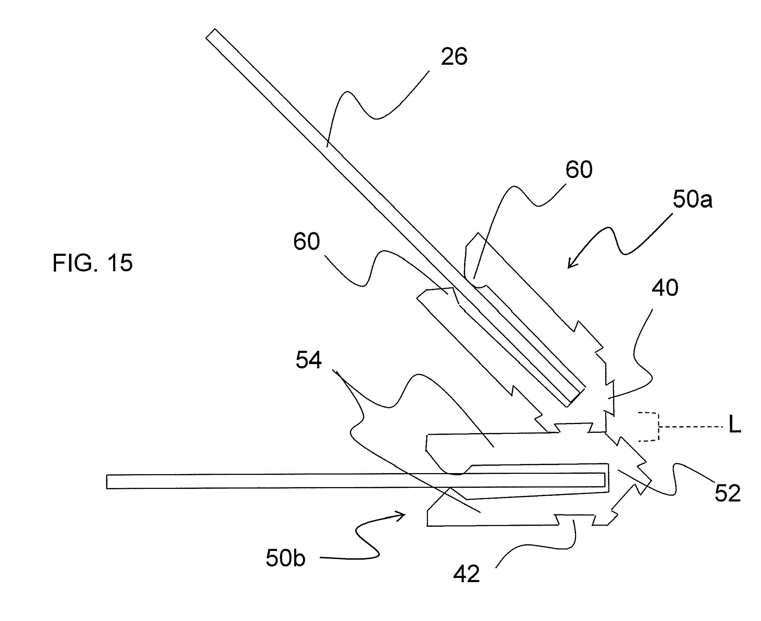

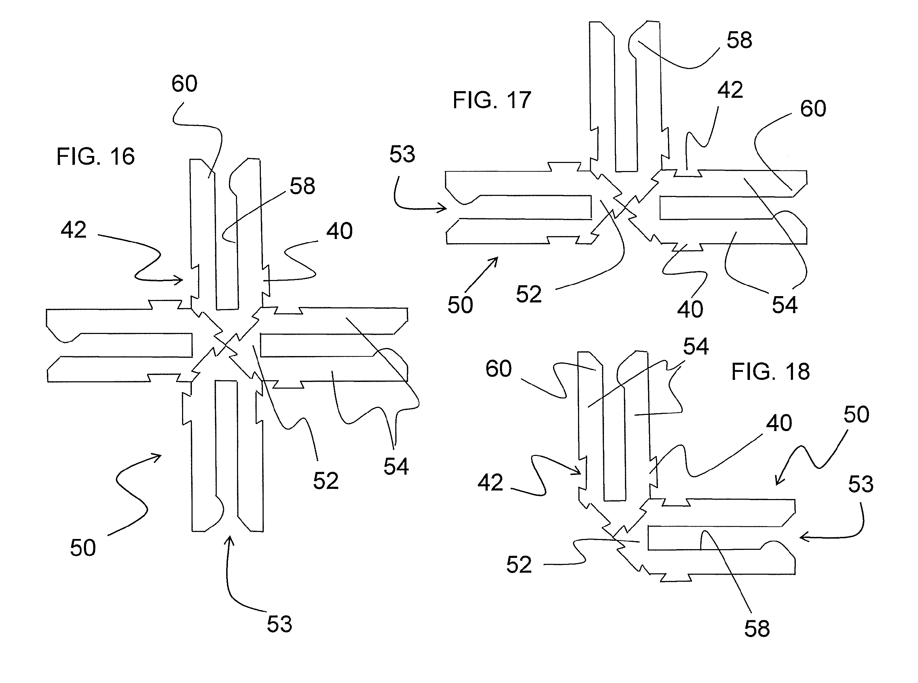

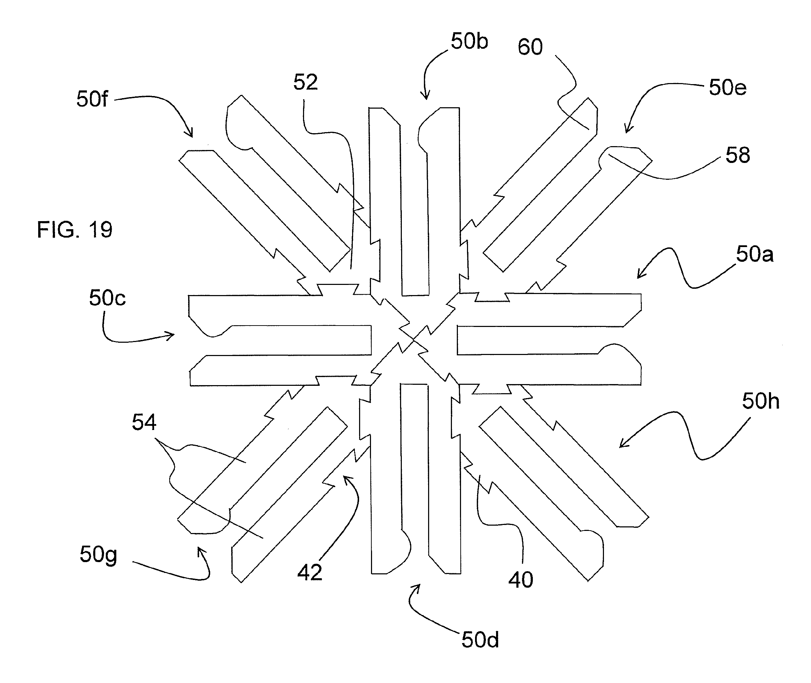

A slanted roof for construction on top of wall structures as described above may be formed by using two U-shaped clips 50 as shown in FIG. 15. The attachment link L demonstrates the alignment of one U-shaped clip 50a within another 50b with the position of the link L on the fastener determining the overall planar extension and direction of a tile of material 26 that is inserted within the fastener. Common shapes described above such as X, T or L shapes as shown in FIGS. 16 - 18 may be formed by interlocking the uniform U-shaped clips 50 providing for a reduction in manufacturing costs. Uniform shapes other than a U-shaped clip, such as integral L, I or T shaped fasteners, may also be formed with similar protrusions and slots or cutouts providing for even more complex attachments and designs. The complexity is shown in FIG. 19 with the formation of a star shaped fastener from a set of uniform U-shaped clips 50. The star shape may be formed by interlocking a first U-shaped clip 50a with a second U-shaped clip 50b to form an L-shaped fastener. A second L-shaped fastener may be formed from clips 50c and 50d and by interlocking the slot of 50c and the protrusion of 50d and then a cross or X-shaped fastener may be formed by interlocking the protrusion of 50c with the slot of 50b and the slot of 50d with the protrusion of 50a. Additional fasteners may then be interlocked between each of the U-shaped fasteners forming the cross (50a, 50b, 50c, 50d) with each fastener (50e, 50f, 50g, 50h) extending at 45° angles from each of the 90°angles formed by the cross shaped fastener.

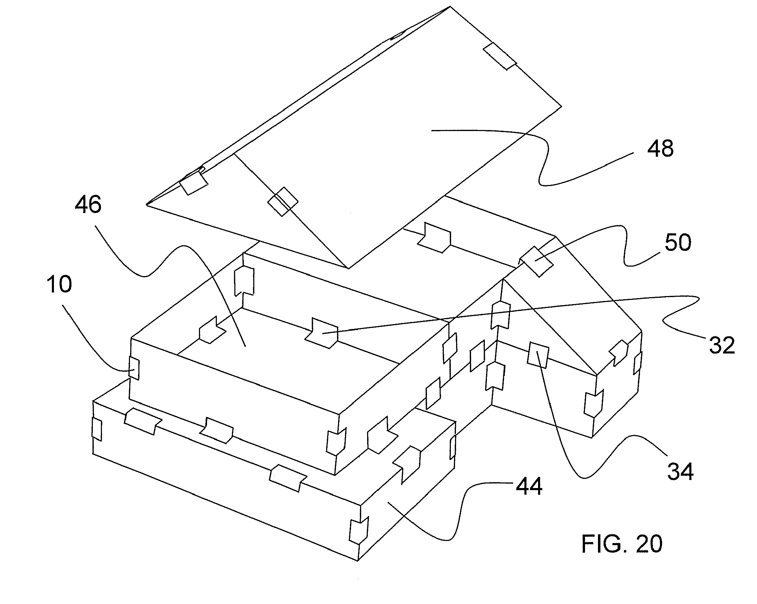

The structural support fastener of the present invention either preformed for alignment of tile material in a specific planar direction, or by providing a uniform shaped fastener with interlocking attachments, allows complex structures to be created. As shown in FIG. 20, the structural support fasteners align tile material of various shapes and sizes and rigidly support the material and construction providing for a structure to be easily picked up and moved, or stacked on top of another structure to form multilevel environments. The tiles 26 may depict graphical representations of stone, wood or brick walls, tiled floors, terraces, balconies, windows, doors and other architectural structures. The structural support of the fasteners also provide for cutouts or openings within the tile to allow access to the interior and depict doors or windows for the structure. A roof 48 may be formed as described above from the interlocking of two U-shaped clips 50 to form the proper angle for a tile of material 26 to extend and cover the enclosure. By mixing and matching the fasteners of various planar extensions, structures may be easily constructed and then taken apart and reformed into other structures to adapt to other uses and environments for gaming or for use with miniatures or figurines.

The invention has been described in detail with particular reference to certain preferred embodiments thereof, but it will be understood that variations and modifications can be effected within the spirit and scope of the invention.

## Claims

1. A fastener comprising:
a hub;
a plurality of support legs extending from the hub;
at least one protrusion along at least one of the plurality of support legs;
at least one slot along at least one of the plurality of support legs mateable to the at least one protrusion formed on a second fastener; and
wherein the protrusion of one fastener is insertable into the slot of the second fastener to form a more complex releasably connected fastener.

2. The fastener of claim 1 wherein at least one of the plurality of support legs further comprises at least one tooth for gripping a separate element inserted between the support legs.

3. The fastener of claim 1 or 2 wherein the hub and the plurality of support legs are integrally connected in the nature of a living hinge to allow relative flexing of the support legs to receive a separate element inserted between the support legs.

4. The fastener of claim 1, 2 or 3, wherein the complex releasably connected fastener comprises an interlocking of one or more individual fasteners aligning the relative support legs at an acute angle.

5. The fastener of claim 1, 2 or 3, wherein the complex releasably connected fastener comprises an interlocking of one or more individual fasteners aligning the relative support legs at an obtuse angle.

6. The fastener of any preceding claim, wherein the plurality of support legs are spaced apart a desired distance to frictionally receive and support a substantially planar tile material within a space between the support legs.

7. The fastener of claim 6 wherein the fastener receives and supports a plurality of tile materials to form modular, multi-level structures.

8. The fastener of claim 7 wherein each of the plurality of tile materials is provided with an adjacently matching graphic design to illustrate a desired edifice facsimile or environment.

9. The fastener of claim 8 wherein the material of the fastener is translucent so the graphic design of the tile materials is viewable therethrough.

10. A method of constructing a complex fastener comprising the steps of:
forming a first fastener having a hub defining a plurality of support legs extending from the hub;
providing at least one protrusion along at least one of the plurality of support legs;
forming at least one slot along at least one of the plurality of support legs mateable to the at least one protrusion provided on a second fastener; and
inserting the protrusion of the first fastener into the slot of the second fastener to form a more complex releasably connected fastener.

11. A representative environmental construct including a plurality of releasably connectable elements which combine to form a desired 3-dimensional composition, the releasably connectable elements of the representative environmental construct comprising:
a plurality of substantially rigid tiles;
a fastener comprising a hub supporting a clip, and the clip being defined by a pair of support legs spaced a predetermined distance apart to frictionally engage at least one of the plurality of substantially rigid tiles;
at least a first releasable attachment point located on at least one of the hub and the clip for connecting the fastener to another fastener to form a more complex releasably connected fastener.

12. The construct as set forth in claim 11 wherein the fastener further comprises at least two clips integrally connected at the hub and the respective support legs being connected with the hub as a living hinge.

13. The construct as set forth in claim 12 wherein the at least two clips are arranged about the hub to support respective tile pieces at one of right angles, acute angles and obtuse angles relative to one another.

14. The construct as set forth in claim 12 or 13 wherein at least one clip on the fastener is provided with at least one protrusion to directly engage a surface of a tile and facilitate engagement of the tile between the two support legs of the clip.

15. The construct as set forth in any of claims 11 to 14 wherein each of the substantially rigid tiles is provided with a graphic design representative of a desired physical environment.
